# EUROPEAN PATENT APPLICATION

(11) **EP 4 615 021 A1**
(43) Date of publication of application: **10.09.2025**
(21) Application number: 23885058.0
(22) Date of filing: 02.11.2023
(51) Int. Cl.: H04W 8/14

(54) **COMMUNICATION METHOD AND APPARATUS, AND STORAGE MEDIUM**

(30) Priority: 02.11.2022 CN 202211364415
(71) Applicant: CHINA MOBILE COMMUNICATION CO., LTD RESEARCH INSTITUTE, Beijing 100053 (CN); CHINA MOBILE COMMUNICATIONS GROUP CO., LTD, Beijing 100032 (CN)
(72) Inventor: BAI, Xueqian, Beijing 100053 (CN); WEI, Bin, Beijing 100053 (CN); LIU, Chen, Beijing 100053 (CN); ZHANG, Jianyin, Beijing 100053 (CN); SONG, Yue, Beijing 100053 (CN)
(74) Representative: Maiwald GmbH
(86) International application number: PCT/CN2023/129389
(87) International publication number: WO 2024/094133

(57) **Abstract**

Disclosed in the present invention are a communication method and apparatus, and a storage medium. The method comprises: a network device receiving first information from at least one device; and determining second information according to the first information, wherein the at least one device comprises a first device and/or a second device, the first information is data channel negotiation result information of the at least one device, and the second information is data channel indication information.

## Description

### TECHNICAL FIELD

The disclosure relates to the field of wireless communications, in particular to a communication method, a communication apparatus and a storage medium.

### BACKGROUND

Internet protocol multimedia subsystem (IMS) data channel is a new concept in the industry. Its main technical feature is to superimpose a data channel of fifth generation (5G) wireless systems on the basis of voice over long term evolution (VoLTE) services, to upgrade IMS-based real-time audio and video communications to real-time interactions, thereby enriching IMS-enabled service scenarios.

In related art, a data channel (DC) negotiation mechanism defined by a 3rd generation partnership project (3GPP) network is to carry a streaming media type (e.g., a DC capability tag) in an initial invite (INVITE) request or a response message to a session initialization protocol (SIP) request. In detail, a first terminal (or network) initiates an initial request to a second terminal (or network), and the initial request carries media feature tags (including the DC capability tag) of all supported streaming media types. If the second terminal (or network) has a DC capability, the second terminal (or network) carries the media feature tags (including the DC capability tag) of all the supported streaming media types in the response message to the SIP request.

### SUMMARY

In view of this, the main object of the disclosure is to provide a communication method, a communication apparatus and a storage medium.

To achieve the above object, the technical solutions of the disclosure are achieved as follows.

Embodiments of the disclosure provide a communication method. The communication method is performed by a network device, and includes:
receiving first information from at least one device; and
determining second information based on the first information;
in which the at least one device includes a first device and/or a second device, the first information includes DC negotiation results information of the at least one device, and the second information is DC indication information.

In the above solution, the DC negotiation results information of the second device includes at least one of following information:
an indication about that a second terminal does not support a DC;
an indication about that a second network does not support the DC;
an indication about failure of DC negotiation of the second terminal;
an indication about failure of DC negotiation of the second network; or
an indication about that DC information is not contained.

In the above solution, the DC negotiation results information of the second device includes at least one of following information:
an indication about that a second terminal supports a DC;
an indication about that a second network supports the DC;
an indication about success of DC negotiation of the second terminal;
an indication about success of DC negotiation of the second network; or
an indication that contains DC information after negotiation.

In the above solution, the second device includes at least one of: a second terminal, a network element of a second network, or the second network.

In the above solution, the DC negotiation results information of the first device includes at least one of following information:
an indication about that a first network does not support a DC;
an indication about that a first terminal does not support the DC;
an indication about failure of DC negotiation of the first network;
an indication about failure of DC negotiation of the first terminal; or
an indication about that DC information is not contained.

In the above solution, the DC negotiation results information of the first device includes at least one of following information:
an indication about that a first network supports a DC;
an indication about that a first terminal supports the DC;
an indication about success of DC negotiation of the first network;
an indication about success of DC negotiation of the first terminal; or
an indication that contains DC information after negotiation.
In the above solution, the first device includes at least one of: a first terminal, a network element of a first network, or the first network;
the network element of the first network includes at least one of:
   a proxy-call session control function (P-CSCF), a channel media function (CMF), a serving-call session control function (S-CSCF), a multi-media application server (MMTEL AS), a data channel media function (DCMF), a media repository server (MRS), a data channel media (DCM), or a data channel server-user plane (DCS-U).

In the above solution, the DC indication information includes at least one of:
a dual network mode;
a dual peer mode;
a local network mode;
a peer or remote network mode; or
an end-to-end mode.

In the above solution, the method further includes:
sending a first message to the first device, in which the first message at least includes the second information.

In the above solution, the first message is one of: a calling request response message, a 183 message, a 200OK message or a DC request response message.

In the above solution, after sending the first message to the first device, the method further includes:
receiving a first request message from the first device, in which the first request message is used to request for first application information;
determining the first application information based on the first request message and/or the second information; and
sending the first application information to the first device.

In the above solution, the first request message includes at least one of:
a user identity (ID);
a first terminal ID;
DC service information;
required DC mode information; or
a request for DC service catalogue information.

In the above solution, the first application information includes:
information on programs that match a required DC mode in the first request message, and/or, a program list that matches the required DC mode in the first request message.

In the above solution, after determining the second information, the method further includes:
receiving a second request message from the first device, in which the second request message is used for requesting to query the DC indication information, and/or, for obtaining second application information; and
sending the second information to the first device based on the second request message, and/or, determining the second application information based on at least one of the second request message, the DC indication information, locally stored information or information obtained by querying a pre-configured database, and sending the second application information to the first device.

In the above solution, the second application information includes at least one of:
the DC indication information;
a first application catalogue, comprising information on programs determined based on the DC indication information; or
a second application catalogue, comprising information on at least one program, in which each program meets a requirement of the DC indication information.

In the above solution, the at least one device includes the first device and the second device, and before receiving the first information from the second device, the method further includes:
receiving a third request message from the first device, in which the third request message is used for requesting to establish a DC with the second device; and
sending a fourth request message to the second device, in which the fourth request message is used for requesting the second device to establish a DC with the first device.

The embodiments of the disclosure provide a communication method. The communication method is performed by a first device, and includes:
sending first information to a network device, in which the first information is DC negotiation results information of the first device.

In the above solution, the method further includes:
receiving a first message from the network device, in which the first message at least includes second information, and the second information is DC indication information.

In the above solution, the DC negotiation results information of the first device includes at least one of following information:
an indication about that a first network does not support a DC;
an indication about that a first terminal does not support the DC;
an indication about failure of DC negotiation of the first network;
an indication about failure of DC negotiation of the first terminal; or
an indication about that DC information is not contained.

In the above solution, the DC negotiation results information of the first device includes at least one of following information:
an indication about that a first network supports a DC;
an indication about that a first terminal supports the DC;
an indication about success of DC negotiation of the first network;
an indication about success of DC negotiation of the first terminal; or
an indication that contains DC information after negotiation.

In the above solution, the first device includes at least one of: a first terminal, a network element of a first network, or the first network;
the network element of the first network includes at least one of:
a P-CSCF, a CMF, an S-CSCF, an MMTEL AS, a DCMF, an MRS, a DCM, or a DCS-U.

In the above solution, the DC indication information includes at least one of:
a dual network mode;
a dual peer mode;
a local network mode;
a peer or remote network mode; or
an end-to-end mode.

In the above solution, the first message is one of: a calling request response message, a 183 message, a 200OK message or a DC request response message.

In the above solution, after receiving the first message from the network device, the method further includes:
sending a first request message to the network device, in which the first request message is used to request for first application information; and
receiving the first application information from the network device.

In the above solution, the first request message includes at least one of:
a user ID;
a first terminal ID;
DC service information;
required DC mode information; or
a request for DC service catalogue information.

In the above solution, the first application information includes:
information on programs that match a required DC mode in the first request message, and/or, a program list that matches the required DC mode in the first request message.

In the above solution, after sending the first information to the network device, the method further includes:
sending a second request message to the network device, in which the second request message is used for requesting to query the DC indication information, and/or for obtaining second application information; and
receiving the second information and/or the second application information from the network device.

In the above solution, the second application information includes at least one of:
the DC indication information;
a first application catalogue, comprising information on programs determined based on the DC indication information; or
a second application catalogue, comprising information on at least one program, wherein each program meets a requirement of the DC indication information.

The embodiments of the disclosure provide a communication method. The communication method is performed by a second device, and includes:
sending first information to a network device, in which the first information is DC negotiation results information of the second device.

In the above solution, the DC negotiation results information of the second device includes at least one of following information:
an indication about that a second terminal does not support a DC;
an indication about that a second network does not support the DC;
an indication about failure of DC negotiation of the second terminal;
an indication about failure of DC negotiation of the second network; or
an indication about that DC information is not contained.

In the above solution, the DC negotiation results information of the second device includes at least one of following information:
an indication about that a second terminal supports a DC;
an indication about that a second network supports the DC;
an indication about success of DC negotiation of the second terminal;
an indication about success of DC negotiation of the second network; or
an indication that contains DC information after negotiation.

In the above solution, the second device includes at least one of: a second terminal, a network element of a second network, or the second network.

In the above solution, before sending the first information to the network device, the method further includes:
receiving a fourth request message from the network device, in which the fourth request message is used for requesting the second device to establish a DC with a first device; and
trying to establish the DC.

The embodiments of the disclosure provide a communication apparatus. The communication apparatus is applied to a network device, and includes:
a first receiving module, configured to receive first information from at least one device; and
a first processing module, configured to determine second information based on the first information;
in which the at least one device includes a first device and/or a second device, the first information includes DC negotiation results information of the at least one device, and the second information is DC indication information.

In the above solution, the DC negotiation results information of the second device includes at least one of following information:
an indication about that a second terminal does not support a DC;
an indication about that a second network does not support the DC;
an indication about failure of DC negotiation of the second terminal;
an indication about failure of DC negotiation of the second network; or
an indication about that DC information is not contained.

In the above solution, the DC negotiation results information of the second device includes at least one of following information:
an indication about that a second terminal supports a DC;
an indication about that a second network supports the DC;
an indication about success of DC negotiation of the second terminal;
an indication about success of DC negotiation of the second network; or
an indication that contains DC information after negotiation.

In the above solution, the second device includes at least one of: a second terminal, a network element of a second network, or the second network.

In the above solution, the DC negotiation results information of the first device includes at least one of following information:
an indication about that a first network does not support a DC;
an indication about that a first terminal does not support the DC;
an indication about failure of DC negotiation of the first network;
an indication about failure of DC negotiation of the first terminal; or
an indication about that DC information is not contained.

In the above solution, the DC negotiation results information of the first device includes at least one of following information:
an indication about that a first network supports a DC;
an indication about that a first terminal supports the DC;
an indication about success of DC negotiation of the first network;
an indication about success of DC negotiation of the first terminal; or
an indication that contains DC information after negotiation.

In the above solution, the first device includes at least one of: a first terminal, a network element of a first network, or the first network;
the network element of the first network includes at least one of:
a P-CSCF, a CMF, an S-CSCF, an MMTEL AS, a DCMF, an MRS, a DCM, or a DCS-U.

In the above solution, the DC indication information includes at least one of:
a dual network mode;
a dual peer mode;
a local network mode;
a peer or remote network mode; or
an end-to-end mode.

In the above solution, the apparatus further includes: a first sending module, configured to send a first message to the first device, in which the first message at least includes the second information.

In the above solution, the first message is one of: a calling request response message, a 183 message, a 200OK message or a DC request response message.

In the above solution, after sending the first message to the first device, the first receiving module is configured to receive a first request message from the first device, in which the first request message is used to request for first application information,
the first processing module is configured to determine the first application information based on the first request message and/or the second information; and
the first sending module is configured to send the first application information to the first device.

In the above solution, the first request message includes at least one of:
a user ID;
a first terminal ID;
DC service information;
required DC mode information; or
a request for DC service catalogue information.

In the above solution, the first application information includes:
information on programs that match a required DC mode in the first request message, and/or, a program list that matches the required DC mode in the first request message.

In the above solution, after determining the second information, the first receiving module is configured to receive a second request message from the first device, in which the second request message is used for requesting to query the DC indication information, and/or, for obtaining second application information,
the first processing module is configured to determine the second application information based on at least one of the second request message, the DC indication information, locally stored information or information obtained by querying a pre-configured database,
the first sending module is configured to send the second information to the first device, and/or, and send the second application information to the first device.

In the above solution, the second application information includes at least one of:
the DC indication information;
a first application catalogue, comprising information on programs determined based on the DC indication information; or
a second application catalogue, comprising information on at least one program, in which each program meets a requirement of the DC indication information.

In the above solution, the at least one device includes the first device and the second device, and before receiving the first information from the second device, the first receiving module is configured to receive a third request message from the first device, in which the third request message is used for requesting to establish a DC with the second device; and
the first sending module is configured to send a fourth request message to the second device, in which the fourth request message is used for requesting the second device to establish a DC with the first device.

The embodiments of the disclosure provide a communication apparatus. The apparatus is applied to a first device, and includes:
a second sending module, configured to send first information to a network device, in which the first information is DC negotiation results information of the first device.

In the above solution, the apparatus further includes: a second receiving module, configured to receive a first message from the network device, in which the first message at least includes second information, and the second information is DC indication information.

In the above solution, the DC negotiation results information of the first device includes at least one of following information:
an indication about that a first network does not support a DC;
an indication about that a first terminal does not support the DC;
an indication about failure of DC negotiation of the first network;
an indication about failure of DC negotiation of the first terminal; or
an indication about that DC information is not contained.

In the above solution, the DC negotiation results information of the first device includes at least one of following information:
an indication about that a first network supports a DC;
an indication about that a first terminal supports the DC;
an indication about success of DC negotiation of the first network;
an indication about success of DC negotiation of the first terminal; or
an indication that contains DC information after negotiation.

In the above solution, the first device includes at least one of: a first terminal, a network element of a first network, or the first network;
the network element of the first network includes at least one of:
a P-CSCF, a CMF, an S-CSCF, an MMTEL AS, a DCMF, an MRS, a DCM, or a DCS-U.

In the above solution, the DC indication information includes at least one of:
a dual network mode;
a dual peer mode;
a local network mode;
a peer or remote network mode; or
an end-to-end mode.

In the above solution, the first message is one of: a calling request response message, a 183 message, a 200OK message or a DC request response message.

In the above solution, after receiving the first message from the network device, the second sending module is further configured to send a first request message to the network device, in which the first request message is used to request for first application information,
and the second receiving module is configured to receive the first application information from the network device.

In the above solution, the first request message includes at least one of:
a user ID;
a first terminal ID;
DC service information;
required DC mode information; or
a request for DC service catalogue information.

In the above solution, the first application information includes:
information on programs that match a required DC mode in the first request message, and/or, a program list that matches the required DC mode in the first request message.

In the above solution, after sending the first information to the network device, the second sending module is further configured to send a second request message to the network device, in which the second request message is used for requesting to query the DC indication information, and/or for obtaining second application information,
and the second receiving module is configured to receive the second information and/or the second application information from the network device.

In the above solution, the second application information includes at least one of:
the DC indication information;
a first application catalogue, comprising information on programs determined based on the DC indication information; or
a second application catalogue, comprising information on at least one program, wherein each program meets a requirement of the DC indication information.

The embodiments of the disclosure provide a communication apparatus. The apparatus is applied to a second device, and includes:
a third sending module, configured to send first information to a network device, in which the first information is DC negotiation results information of the second device.

In the above solution, the DC negotiation results information of the second device includes at least one of following information:
an indication about that a second terminal does not support a DC;
an indication about that a second network does not support the DC;
an indication about failure of DC negotiation of the second terminal;
an indication about failure of DC negotiation of the second network; or
an indication about that DC information is not contained.

In the above solution, the DC negotiation results information of the second device includes at least one of following information:
an indication about that a second terminal supports a DC;
an indication about that a second network supports the DC;
an indication about success of DC negotiation of the second terminal;
an indication about success of DC negotiation of the second network; or
an indication that contains DC information after negotiation.

In the above solution, the second device includes at least one of: a second terminal, a network element of a second network, or the second network.

In the above solution, before sending the first information to the network device, the method further includes:
receiving a fourth request message from the network device, in which the fourth request message is used for requesting the second device to establish a DC with a first device; and
trying to establish the DC.

The embodiments of the disclosure provide a communication apparatus. The communication apparatus includes: a memory, a processor and a computer program stored on the memory and executable by the processor. The processor implements any step of the method on the network device side when executing the computer program, or the processor implements any step of the method on the first device side when executing the computer program, or the processor implements any step of the method on the second device side when executing the computer program.

The embodiment of the disclosure provides a computer-readable storage medium having a computer program stored thereon. When the computer program is executed by a processor, any step of the method on the network device side is implemented, or when the computer program is executed by the processor, any step of the method on the first device side is implemented, or when the computer program is executed by the processor, any step of the method on the second device side is implemented.

The embodiments of the disclosure provide a communication method, a communication apparatus and a storage medium. The method includes: a network device receiving first information from a first device and/or receiving first information from a second device; determining second information based on the first information from the first device and/or the first information from the second device, in which the first information from the first device is DC negotiation results information of the first device, the first information from the second device is DC negotiation results information of the second device, and the second information is DC indication information. In this way, the network device determines the DC indication information based on the DC negotiation results information of the first device and/or the DC negotiation results information of the second device, so that the first device can perform application-related operations in combination with the DC indication information.

### BRIEF DESCRIPTION OF THE DRAWINGS

FIG. 1 is a flowchart of a communication method provided by an embodiment of the disclosure.
FIG. 2 is a flowchart of a communication method provided by an embodiment of the disclosure.
FIG. 3 is a flowchart of a communication method provided by an embodiment of the disclosure.
FIG. 4 is a flowchart of a DC negotiation method provided by an application embodiment of the disclosure.
FIG. 5 is a flowchart of a DC negotiation method provided by an application embodiment of the disclosure.
FIG. 6 is a flowchart of a unilateral DC negotiation method provided by an application embodiment of the disclosure.
FIG. 7 is a flowchart of a unilateral DC negotiation method provided by an application embodiment of the disclosure.
FIG. 8 is a schematic diagram of a communication apparatus provided by an embodiment of the disclosure.
FIG. 9 is a schematic diagram of a communication apparatus provided by an embodiment of the disclosure.
FIG. 10 is a schematic diagram of a communication apparatus provided by an embodiment of the disclosure.
FIG. 11 is a schematic diagram of a communication device provided by an embodiment of the disclosure.

### DETAILED DESCRIPTION

In related art, a DC negotiation mechanism defined by a 3GPP network is to carry a streaming media type (e.g., a DC capability tag) in an initial INVITE request or a response message to a SIP request. In detail, a first terminal (or network) initiates an initial request to a second terminal (or network), and the initial request carries media feature tags (including the DC capability tag) of all supported streaming media types. If the second terminal (or network) has a DC capability, the second terminal (or network) carries the media feature tags (including the DC capability tag) of all the supported streaming media types in the response message to the SIP request.

However, if the second terminal (or network) does not support the DC capability, how to handle the corresponding request and inform the first terminal (or network) of its DC capability is a problem that needs to be solved currently.

In view of this, the disclosure provides a communication method, a communication apparatus and a storage medium.

The disclosure will be further described in detail in combination with the embodiments.

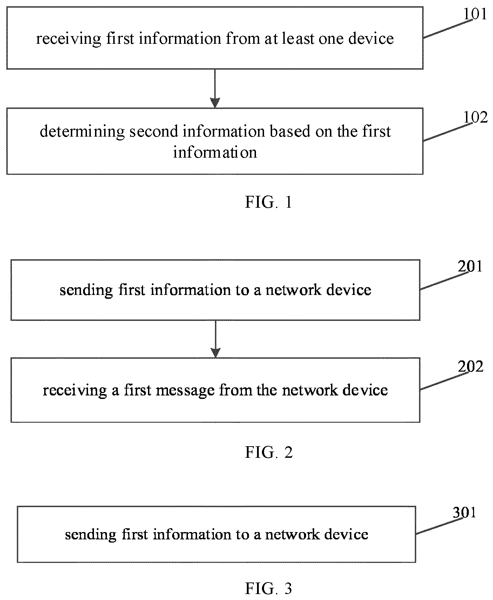

FIG. 1 is a flowchart of a communication method provided by an embodiment of the disclosure. As illustrated in FIG. 1, the communication method is applied to a network device. The method includes the following steps.

At step 101, first information is received from at least one device.

The at least one device includes a first device and/or a second device. In step 101, first information from the first device and/or first information from the second device may be received.

At step 102, second information is determined based on the first information.

In detail, in step 102, the second information may be determined based on the first information from the first device and/or the first information from the second device.

The first information from the first device is DC negotiation results information of the first device.

The first information from the second device is DC negotiation results information of the second device.

The second information is DC indication information.

The network device includes at least one of: a DC Control Function (DCCF), a DC Signaling Function or DC Service Function (DCSF), a DC Service-Controller (DCS-C), or a Media Resource Control Function (MRCF).

The first device includes at least one of: a first terminal, a network element of a first network, or the first network. The first terminal represents a calling terminal or a local terminal, and the first network represents a calling network or a local network.

The network element of the first network includes at least one of: a P-CSCF, a CMF, an S-CSCF, an AS (Application Server)/MMTEL AS, a DCMF, an MRS, a DCM, or a DCS-U.

The second device includes at least one of: a second terminal, a network element of a second network, or the second network. The second terminal represents a called terminal, a remote terminal or a peer terminal. The second network represents a called network, a remote network or a peer network. The second device embodies a peer network, a peer device or a peer terminal relative to the first device side.

DC negotiation may be understood or expressed as DC setup or calling control, and it may also be understood and described as DC setup or calling control.

Correspondingly, the DC negotiation results information may be described as DC setup result information or calling control result information.

In some embodiments, the DC negotiation results information of the second device may specifically indicate DC negotiation or DC failure.

A DC of the second device may include a DC of a second terminal or a DC of a second network.

In detail, in response to failure of the DC negotiation of the second device, the DC negotiation results information of the second device may include at least one of following information:
an indication about (i.e., used for indicating) that a second terminal does not support a DC;
an indication about that a second network does not support the DC;
an indication about failure of DC negotiation of the second terminal;
an indication about failure of DC negotiation of the second network; or
an indication about that DC information is not contained.

In detail, in response to success of the DC negotiation of the second device, the DC negotiation results information of the second device includes at least one of following information:
an indication about that a second terminal supports a DC;
an indication about that a second network supports the DC;
an indication about success of DC negotiation of the second terminal;
an indication about success of DC negotiation of the second network; or
an indication that contains DC information after negotiation.

The indication containing the DC information after negotiation may specifically include:
an indication containing DC information of the second terminal after negotiation; or
an indication containing DC information of the second network after negotiation.

In some embodiments, the DC negotiation results information of the first device may specifically indicate DC negotiation or DC failure.

A DC of the first device may include a DC of a first terminal or a DC of a first network.

In detail, in response to failure of the DC negotiation of the first device, the DC negotiation results information of the first device includes at least one of following information:
an indication about that a first network does not support a DC;
an indication about that a first terminal does not support the DC;
an indication about failure of DC negotiation of the first network;
an indication about failure of DC negotiation of the first terminal; or
an indication about that DC information is not contained.

In detail, in response to success of the DC negotiation of the first device, the DC negotiation results information of the first device includes at least one of following information:
an indication about that a first network supports a DC;
an indication about that a first terminal supports the DC;
an indication about success of DC negotiation of the first network;
an indication about success of DC negotiation of the first terminal; or
an indication that contains DC information after negotiation.

The indication containing the DC information after negotiation may specifically include:
an indication containing DC information of the first terminal after negotiation; or
an indication containing DC information of the first network after negotiation.

In some embodiments, the DC indication information includes at least one of:
a dual network mode;
a dual peer mode;
a local network mode;
a peer or remote network mode; or
an end-to-end mode.

The dual network mode means that the first network (as a local network) and the second network (as a peer network) have established a DC, or the first network and the second network both support the DC.

The dual peer mode (also called dual UE mode) means that the first terminal (as a local terminal) and the second terminal (as a peer terminal) have established a DC, or the first terminal and the second terminal both support the DC.

The local network mode means that the first network has established a DC or supports the DC, or the first network and the first terminal have established a DC or both support the DC.

The remote network mode means that the second network has established a DC or supports the DC, or the second network and the first terminal have established a DC or both support the DC.

The end-to-end mode means that the first terminal, the first network, the second network and the second terminal have established a DC or all support the DC.

In applications, the above five DC modes can be combined with each other. For example, the DC indication information includes the dual network mode and the dual peer mode. Based on the DC indication information, the first device understands that the first network, the second network, the first terminal and the second terminal have established a DC or all support the DC.

In some embodiments, the method further includes:
sending a first message to the first device, in which the first message at least includes the second information.

In some embodiments, the first message is one of: a calling request response message, a 183 message, a 200OK message or a DC request response message.

In applications, sending the first message to the first device, includes:
sending one of a calling request response message, a 183 message, a 200OK message or a DC request response message, to the first device.

One of the calling request response message, the 183 message, the 200OK message or the DC request response message includes or carries the second information.

In practical applications, the first device may request to obtain application information.

On the basis, in some embodiments, the method further includes:
receiving a first request message from the first device, in which the first request message is used to request for first application information;
determining the first application information based on the first request message and/or the second information; and
sending the first application information to the first device.

The first request message includes at least one of:
a user ID;
a first terminal ID, e.g., cell phone number, cell phone International Mobile Subscriber Identity (IMSI);
DC service information;
required DC mode information; or
a request for DC service catalogue information (the catalogue here may also refer to list).

The determined first application information includes:
information on programs that match a required DC mode in the first request message, and/or, a program list that matches the required DC mode in the first request message.

The required DC mode is a required DC mode (which can also be called a target DC mode) obtained by the terminal from the DC indication information.

The DC service information may be described as DC application information, DC program information, DC service information, etc.

The request for DC service catalogue information includes relevant information of DC programs and/or DC applications and/or DC services.

The program information included in the first application information may specifically refer to information of programs that match a mode in the second information, and the mode may be at least one of a dual network mode, a dual peer mode, a local network mode, a peer or remote network mode or an end-to-end mode.

The program information may include at least one of the following: an identification of the program (such as an ID of the program), description information (such as a functional description of the program, a description of how to use the program), and the like.

It should be noted that the program may be described as an application, an application program, a business, a service, etc., which may include an Application (APP), an applet, or an APP and/or a business and/or a service provided in other forms.

Correspondingly, the program list may also be described as an APP list, an application program list, a service list, a DC APP list, a DC program list, a DC service list, a unilateral DC APP list, a unilateral DC program list, a unilateral DC service list, and the like. It only includes information of programs supporting unilateral DC, and their names are not limited.

Correspondingly, determining the first APP information based on the first request message and/or the second information, includes:
determining the first APP information based on at least one of the second information, the user ID, the first terminal ID, the DC service information, a DC list, service subscription information, user subscription information or DC subscription information.

The network device side can learn and save the service subscription information, the user subscription information or the DC subscription information in advance based on the subscription situation.

In practical applications, the first device may pre-establish a DC, and then query a status of the DC and/or obtain APP information.

On the basis, in some embodiments, after determining the second information, the method further includes:
receiving a second request message from the first device, in which the second request message is used for requesting to query the DC indication information, and/or, for obtaining second APP information; and
sending the second information to the first device based on the second request message, and/or, determining the second APP information based on at least one of the second request message, the DC indication information, locally stored information or information obtained by querying a pre-configured database, and sending the second APP information to the first device.

The locally stored information refers to information obtained by the DCSF from a previous subscription process or registration process or from a local database, such as a DC APP ID, a priority of the DC APP, software information of the DC APP, service subscription information, user subscription information, etc.

The second APP information includes at least one of:
the DC indication information;
a first application catalogue, comprising information on programs determined based on the DC indication information; or
a second application catalogue, comprising information on at least one program, wherein each program meets a requirement of the DC indication information.

The second request message includes at least one of the following:
a user ID; or
a first terminal ID.

The network device may query the corresponding second information based on the user ID and/or the first terminal ID.

The database includes at least one of: a DCSF, a DC APP Repository (DCAR), a DCAR Server (DCARS).

The database may also include a program library. The program library includes:
at least one available program;
information of each available program (such as an ID or description information of the program, etc.); and
a mode matching each available program (including at least one of a dual network mode, a dual peer mode, a local network mode, a peer or remote network mode or an end-to-end mode).

In practical applications, a DC setup method is provided.

On the basis, in some embodiments, the method further includes:
receiving a third request message from the first device, in which the third request message is used for requesting to establish a DC with the second device; and
sending a fourth request message to the second device, in which the fourth request message is used for requesting the second device to establish a DC with the first device.

The third request message may include DC media information, such as port information.

The port information may include a first port on the first device side and a second port on the second device side. For example, the DC port information is: DC ID=0/100. 0 represents the first port, and 100 represents the second port.

If a port set and returned by the second device is 100, it is considered that a DC has been successfully established between the first device and the second device. If the port returned by the second device is other ports (ports different from 100 such as 0 and 10), it is considered that the establishment of DC between the first device and the second device has failed.

For example, after the second device receives the DC setup request, the second device may try to establish the DC. If the second terminal does not have a DC capability, the DC negotiation results information of the second device includes at least one of the following:
an indication about that the second terminal does not support a DC; for example, the indication is made by modifying the DC port information in the corresponding DC setup request; for example, the DC setup request sent by the first device carries the DC port information: DC ID=0/100, where 0 represents the port of the first terminal, and 100 should be the port on the second terminal side; because the second terminal does not have a DC capability, it modifies the port information, e.g., modifying 100 to a target port (such as 0 or another port) to inform that it does not have a DC capability;
an indication about failure of DC negotiation of the second terminal; in this way, the failure of DC setup can be directly fed back; or
an indication about that DC information is not contained; for example, the second device deletes the DC media information of the second terminal, so that the replied DC negotiation results information has an indication about that the DC media information is not included.

In practical applications, the first device may acquire a certain program in a targeted manner.

On the basis, in some embodiments, the method further includes:
receiving a fifth request message from the first device, in which the fifth request message is used for requesting to obtain a target program; and
sending the target program to the first device.

The fifth request message may carry a target program ID.

In detail, if the first device needs to acquire a certain target program, it may send the fifth request message, which carries the target program ID, to the network device. The network device determines the target program based on the target program ID and sends it to the first device.

FIG. 2 is a flowchart of a communication method provided by an embodiment of the disclosure. As illustrated in FIG. 2, the communication method is applied to a first device. The method includes the following steps.

At step 201, first information is sent to a network device, in which the first information is DC negotiation results information of the first device.

The first device includes at least one of: a first terminal, a network element of a first network, or the first network. The first terminal represents a calling terminal or a local terminal, and the first network represents a calling network or a local network.

The network element of the first network includes at least one of:
a P-CSCF, a CMF, an S-CSCF, an MMTEL AS, a DCMF, an MRS, a DCM, or a DCS-U.

The network device includes at least one of: a DCCF, a DCSF, a DCS-C, or an MRCF.

In some embodiments, the DC negotiation results information of the first device may specifically indicate DC negotiation or DC setup failure.

A DC of the first device may include a DC of a first terminal or a DC of a first network.

In detail, in response to failure of DC negotiation of the first device, the DC negotiation results information of the first device includes at least one of following information:
an indication about that a first network does not support a DC;
an indication about that a first terminal does not support the DC;
an indication about failure of DC negotiation of the first network;
an indication about failure of DC negotiation of the first terminal; or
an indication about that DC information is not contained.

In detail, in response to success of DC negotiation of the first device, the DC negotiation results information of the first device includes at least one of following information:
an indication about that a first network supports a DC;
an indication about that a first terminal supports the DC;
an indication about success of DC negotiation of the first network;
an indication about success of DC negotiation of the first terminal; or
an indication that contains DC information after negotiation.

In some embodiments, the DC indication information includes at least one of:
a dual network mode;
a dual peer mode;
a local network mode;
a peer or remote network mode; or
an end-to-end mode.

In some embodiments, the method further includes the following step 202.

At step 202, a first message from the network device is received, in which the first message at least includes second information, and the second information is the DC indication information.

The first message is one of: a calling request response message, a 183 message, a 200OK message or a DC request response message.

In applications, receiving the first message to from the network device may include: receiving one of a calling request response message, a 183 message, a 200OK message or a DC request response message, from the network device. One of the calling request response message, the 183 message, the 200OK message or the DC request response message includes or carries the second information.

In some embodiments, after receiving the first message from the network device, the method further includes:
sending a first request message to the network device, in which the first request message is used to request for first APP information; and
receiving the first APP information from the network device.

The first request message includes at least one of:
a user ID;
a first terminal ID;
DC service information;
required DC mode information; or
a request for DC service catalogue information.

The first APP information includes:
information on programs that match a required DC mode in the first request message, and/or, a program list that matches the required DC mode in the first request message.

In practical applications, the first device may pre-establish a DC, and then query a status of the DC and/or obtain APP information.

On the basis, in some embodiments, after sending the first information to the network device, the method further includes:
sending a second request message to the network device, in which the second request message is used for requesting to query the DC indication information, and/or for obtaining second APP information; and
receiving the second information and/or the second APP information from the network device.

The second APP information includes at least one of:
the DC indication information;
a first application catalogue, comprising information on programs determined based on the DC indication information; or
a second application catalogue, comprising information on at least one program, wherein each program meets a requirement of the DC indication information.

In practical applications, a DC setup method is provided.

On the basis, in some embodiments, before sending the first information to the network device, the method further includes:
sending a third request message to the network device, in which the third request message is used for requesting to establish a DC with the second device, and the third request message may include DC media information, such as port information. The port information may include a first port on the first device side and a second port on the second device side. For example, the DC port information is: DC ID=0/100, in which 0 represents the first port, and 100 represents the second port.

After establishing the DC, the first information is determined based on a setup result of whether the DC has been established or not, and then sent to the network device.

In practical applications, the first device may obtain a certain program in a targeted manner.

On the basis, in some embodiments, the method further includes:
sending a fifth request message to the network device, in which the fifth request message is used for requesting to obtain a target program; and
receiving the target program sent by the network device.

The fifth request message may carry a target program ID.

FIG. 3 is a flowchart of a communication method provided by an embodiment of the disclosure. As illustrated in FIG. 3, the communication method is applied to a second device. The method includes the following steps.

At step 301, first information is sent to a network device, in which the first information is DC negotiation results information of the second device.

The second device includes at least one of: a second terminal, a network element of a second network, or the second network. The second terminal represents a called terminal, a remote terminal or a peer terminal. The second network represents a called network, a remote network or a peer network. The second device embodies a peer network, a peer device or a peer terminal relative to the first device side.

The network device includes at least one of: a DCCF, a DCSF, a DCS-C, or an MRCF.

In some embodiments, the DC negotiation results information of the second device may specifically indicate DC negotiation or DC failure.

A DC of the second device may include a DC of a second terminal or a DC of a second network.

In detail, in response to failure of DC negotiation of the second device, the DC negotiation results information of the second device may include at least one of following information:
an indication about that a second terminal does not support a DC;
an indication about that a second network does not support the DC;
an indication about failure of DC negotiation of the second terminal;
an indication about failure of DC negotiation of the second network; or
an indication about that DC information is not contained.

In detail, in response to success of DC negotiation of the second device, the DC negotiation results information of the second device includes at least one of following information:
an indication about that a second terminal supports a DC;
an indication about that a second network supports the DC;
an indication about success of DC negotiation of the second terminal;
an indication about success of DC negotiation of the second network; or
an indication that contains DC information after negotiation.

In some embodiments, before sending the first information to the network device, the method further includes:
receiving a fourth request message from the network device, in which the fourth request message is used for requesting the second device to establish a DC with the first device; and
trying to establish the DC.

After trying to establish the DC, the first information is determined based on a setup result of whether the DC has been established or not.

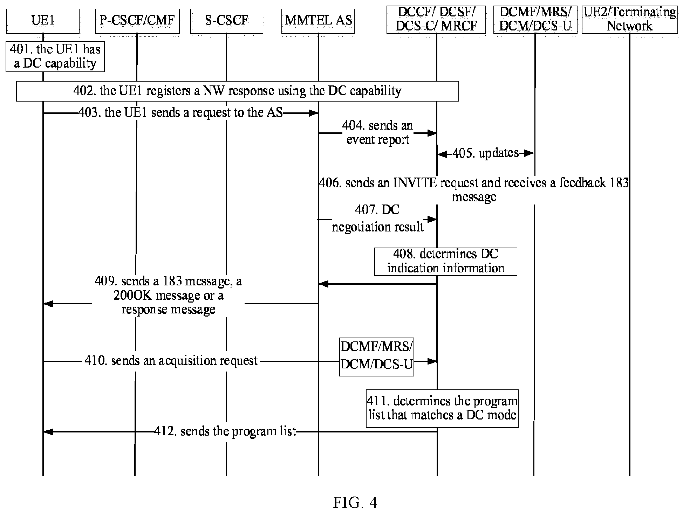

An application embodiment is provided. As illustrated in FIG. 4, the first device includes: a network element of a local network, the local network and/or a UE1, and the second device includes a remote network and/or a UE2.

The network element of the local network includes at least one of: a P-CSCF, a CMF, an S-CSCF, an MMTEL AS, a DCMF, an MRS, a DCM, or a DCS-U.

The network device includes at least one of: a DCCF, a DCSF, a DCS-C, or an MRCF. The method includes the following steps.

At step 401, the UE1 determines that it has a DC capability.

At step 402, the UE1 registers a network (NW) response using the DC capability.

At step 403, the UE1 sends a request to the MMTEL AS.

The request carries DC media information, including DC port information (e.g., DC ID0/100). DC ID100 indicates a DC port 100 of a DC requested to be established by the UE2. DC ID0 indicates that the DC port of the DC established by the UE1 is 0.

At step 404, the MMTEL AS sends an event report to the DCCF/DCSF/DCS-C/MRCF.

The event report carries the DC media information.

At step 405, the DCCF/DCSF/DCS-C/MRCF and the DCMF/MRS/DCM/DCS-U update the DC media information of the first device, e.g., updating DC ID=0.

At step 406, the MMTEL AS sends a request to the second device and receives a 183 message sent by the second device, i.e., performing DC negotiation (also called DC setup negotiation).

The request is used to request the second device (i.e., the remote NW and/or the UE2) to establish a DC. The 183 message is used to inform the MMTEL AS of a DC setup result of the remote NW and/or the UE2.

At step 407, the MMTEL AS sends DC negotiation results information of the second device to the DCCF/DCSF/DCS-C/MRCF.

At step 408, the DCCF/DCSF/DCS-C/MRCF determines DC indication information.

The DCCF/DCSF/DCS-C/MRCF determines the DC indication information based on the DC negotiation results of the first device and the second device.

The DC indication information is DC indication mode information.

At step 409, the DCCF/DCSF/DCS-C/MRCF sends a 183 message, a 200OK message or a response message to the UE1 directly or through the MMTEL AS.

The 183 message, the 200OK message or the response message carries the DC indication information.

The DC indication information can be used as an SIP Answer, which may include: dcamp=0 (indicating an ID of a DC established with the local NW=0), and label=DC indication mode information (indicating a determined DC mode).

At step 410, the UE1 sends an acquisition request for a DC program list (also called DC application list) to the DCCF/DCSF/DCS-C/MRCF.

The acquisition request (equivalent to the above first request message) includes the DC indication information.

At steps 411-412, the DCCF/DCSF/DCS-C/MRCF determines the program list and sends it to the UE1.

The DCCF/DCSF/DCS-C/MRCF determines information of programs that match a DC mode in the DC indication information, and sends the program list to the UE1.

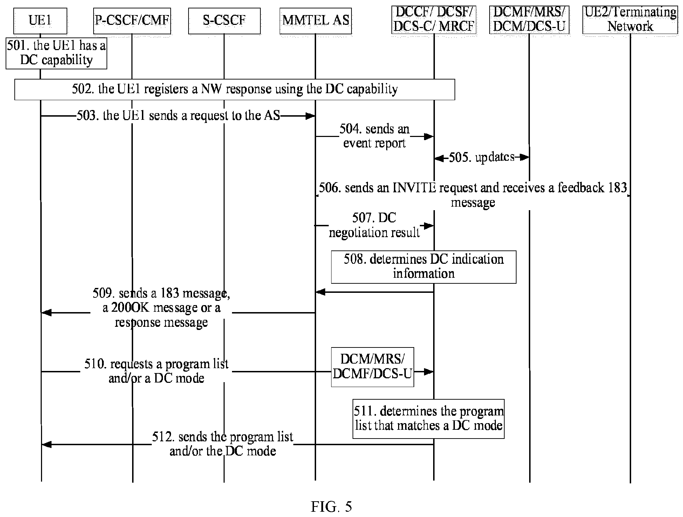

Another embodiment is provided. As illustrated in FIG. 5, steps 501-506 are the same as steps 401-406 shown in FIG. 4, and the details will not be repeated here. The method further includes the following steps.

At step 509, the SIP Answer sent by the DCCF/DCSF/DCS-C/MRCF to the UE1 only includes dcmap=0.

That is, the DCCF/DCSF/DCS-C/MRCF does not actively send the DC indication information to the UE1.

At step 510, the UE1 sends an acquisition request to the DCCF/DCSF/DCS-C/MRCF to request to obtain a program list, and/or, to request to obtain DC indication information.

At steps 511-512, the DCCF/DCSF/DCS-C/MRCF determines the DC indication information and/or the program list and sends it to the UE1.

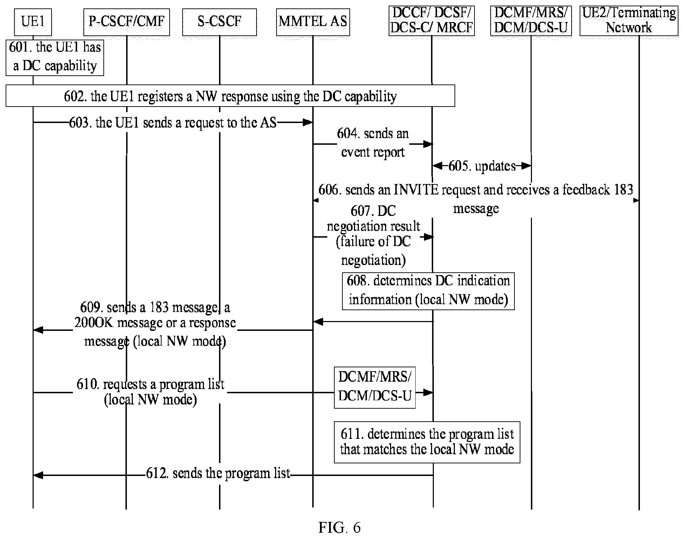

An application embodiment in which DC negotiation of the UE2 has failed is provided. As illustrated in FIG. 6, the method includes the following steps.

Steps 601-606 are the same as steps 401-406 shown in FIG. 4, and will not be repeated here.

At step 607, the MMTEL AS sends DC negotiation results information of the second device to the DCCF/DCSF/DCS-C/MRCF.

At step 608, the DCCF/DCSF/DCS-C/MRCF determines DC indication information.

The DCCF/DCSF/DCS-C/MRCF determines the DC indication information based on the DC negotiation results of the first device and the second device.

Assuming that the DC negotiation results of the first device indicates success of the DC negotiation of the first device, and the DC negotiation results information of the second device indicates failure of the DC negotiation of the UE2, the DC mode is determined as a local NW mode.

At step 609, the DCCF/DCSF/DCS-C/MRCF sends a 183 message, a 200OK message or a response message to the UE1 directly or through the MMTEL AS.

The 183 message, the 200OK message or the response message carries the DC indication information, including: dcamp=0, and label=DC local NW mode (indicating that the determined mode is the local NW mode).

At step 610, the UE1 sends an acquisition request for a program list to the DCCF/DCSF/DCS-C/MRCF.

The acquisition request (equivalent to the above first request message) includes the DC indication information, that is, the local NW mode.

At steps 611-612, the DCCF/DCSF/DCS-C/MRCF determines the program list and sends it to the UE1.

The program list determined by the DCCF/DCSF/DCS-C/MRCF includes information of programs that match the local NW mode.

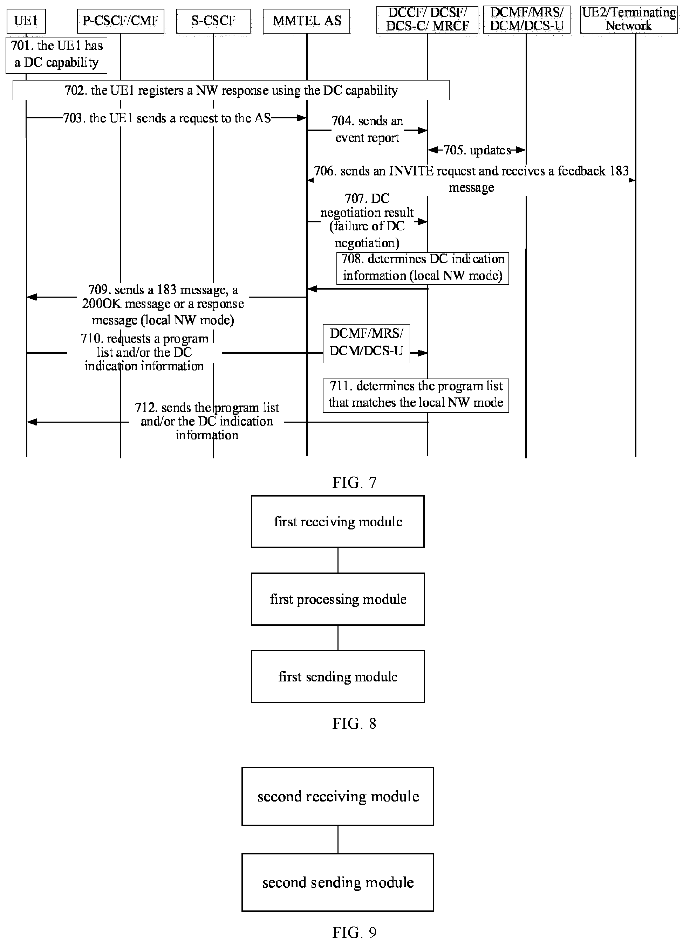

An application embodiment in which DC negotiation of the UE2 has failed is provided. As illustrated in FIG. 7, the method includes the following steps.

Steps 701-706 are the same as steps 501-506 shown in FIG. 5, and will not be repeated here.

At step 707, the MMTEL AS sends DC negotiation results information of the second device to the DCCF/DCSF/DCS-C/MRCF.

At step 708, the DCCF/DCSF/DCS-C/MRCF determines DC indication information.

The DCCF/DCSF/DCS-C/MRCF determines the DC indication information based on the DC negotiation results of the first device and the second device.

Assuming that the DC negotiation result of the first device indicates that the DC negotiation of the first device is successful, and the DC negotiation results of the second device indicates that the DC negotiation of the UE2 has failed, the DC mode is determined as a local NW mode.

At step 709, the DCCF/DCSF/DCS-C/MRCF sends a 183 message, a 200OK message or a response message to the UE1 directly or through the MMTEL AS.

The 183 message, the 200OK message or the response message carries the DC indication information, including: dcamp=0, and label=DC local NW mode (indicating that the determined mode is the local NW mode).

At step 710, the UE1 sends an acquisition request to the DCCF/DCSF/DCS-C/MRCF to request to obtain a program list, and/or to request to obtain the DC indication information.

At steps 711-712, the DCCF/DCSF/DCS-C/MRCF determines the program list and/or the DC indication information and sends it to the UE1.

The DC indication information includes the local NW mode. The program list determined by the DCCF/DCSF/DCS-C/MRCF includes information of programs that match the local NW mode.

FIG. 8 is a schematic diagram of a communication apparatus provided by an embodiment of the disclosure. As illustrated in FIG. 8, the apparatus is applied to a NW device, and includes:
a first receiving module, configured to receive first information from at least one device;
in which the at least one device includes a first device and/or a second device, the first receiving module is configured to receive first information from the first device, and/or, receive first information from the second device; and
a first processing module, configured to determine second information based on the first information.

The first information from the first device is DC negotiation results information of the first device, the first information from the second device is DC negotiation results information of the second device, and the second information is DC indication information.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the NW device can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

FIG. 9 is a schematic diagram of a communication apparatus provided by an embodiment of the disclosure. As illustrated in FIG. 9, the apparatus is applied to a first device, and includes:
a second sending module, configured to send first information to a NW device, in which the first information is DC negotiation results information of the first device.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the first device can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

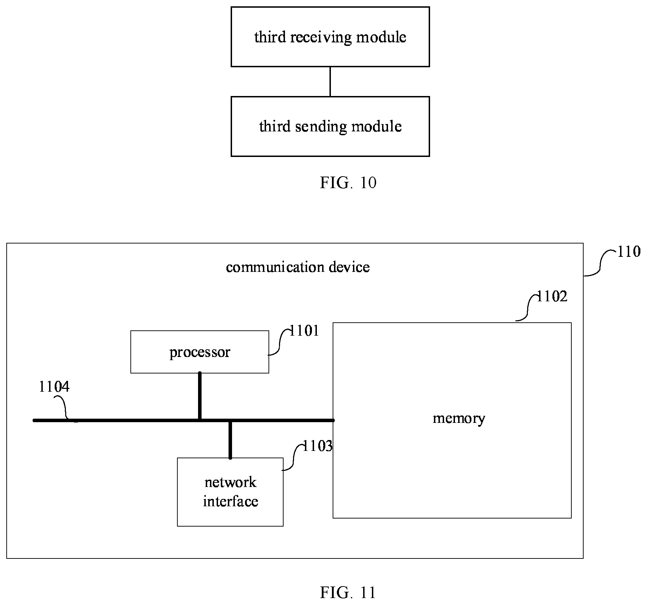

FIG. 10 is a schematic diagram of a communication apparatus provided by an embodiment of the disclosure. As illustrated in FIG. 10, the apparatus is applied to a second device, and includes:
a third sending module, configured to send first information to a network device, in which the first information is DC negotiation results information of the second device.

It should be noted that the apparatus provided in the above embodiments, when implementing its functions, only uses the classification of the above-mentioned functional modules as an example. In actual applications, the above-mentioned functions can be allocated to different functional modules as needed. That is, the internal structure of the second device can be divided into different functional modules to complete all or part of the functions described above. Moreover, the apparatus embodiments and the method embodiments provided in the above embodiments belong to the same concept, and the specific implementation processes in the apparatus embodiments are described in detail in the method embodiments, which will not be repeated here.

FIG. 11 is a schematic diagram of a communication device provided by an embodiment of the disclosure. As illustrated in FIG. 11, the communication device 110 includes a processor 1101 and a memory 1102 for storing a computer program executable by the processor.

If the communication device is a NW device, the processor 1101, when executing the computer program, receives first information from at least one device and determines second information based on the first information. The at least one device includes a first device and/or a second device, the first information is DC negotiation results information of the at least one device, and the second information is DC indication information. In detail, the communication device may also implement the method shown in FIG. 1, which belongs to the same concept as the embodiment of the communication method shown in FIG. 1, and the specific implementation process can be referred to the method embodiments, which will not be repeated here.

If the communication device is a first device, the processor 1101, when executing the computer program, sends first information to a NW device, in which the first information is DC negotiation results information of the first device. In detail, the communication device may also implement the method shown in FIG. 2, which belongs to the same concept as the embodiment of the communication method shown in FIG. 2, and the specific implementation process can be referred to the method embodiments, which will not be repeated here.

If the communication device is a second device, the processor 1101, when executing the computer program, sends first information to a NW device, in which the first information is DC negotiation results information of the second device. In detail, the communication device may also implement the method shown in FIG. 3, which belongs to the same concept as the embodiment of the communication method shown in FIG. 3, and the specific implementation process can be referred to the method embodiments, which will not be repeated here.

In practical applications, the communication device 110 may also include at least one NW interface 1103. The various components in the communication device 110 are coupled together by a bus system 1104. It is understood that the bus system 1104 is used to realize connection communications among these components. The bus system 1104 includes a power bus, a control bus and a status signal bus in addition to a data bus. However, for the sake of clarity, various buses are collectively labeled as the bus system 1104 in FIG. 11. There may be at least one processor 1101. The NW interface 1103 is used for communications between the communication device 110 and other devices in a wired manner or wirelessly.

The memory 1102 in the embodiment of the disclosure is used to store various types of data to support an operation of the communication device 110.

The method disclosed in the above embodiments of the disclosure can be applied in the processor 1101 or realized by the processor 1101. The processor 1101 may be an integrated circuit chip having a signal processing capability. In the implementation process, each step of the above method can be completed by an integrated logic circuit of hardware or an instruction in the form of software in the processor 1101. The processor 1101 may be a general processor, a Digital Signal Processor (DSP), or other programmable logic components, discrete gates or transistor logic components, discrete hardware components, and the like. The processor 1101 can implement or execute the methods, steps and logic blocks disclosed in the embodiments of the disclosure. The general processor may be a microprocessor or any common processors, etc. The steps of the method disclosed in the embodiments of the disclosure can be directly completed by a hardware decoding processor, or by a combination of hardware and software modules in the decoding processor. The software module may be located in a storage medium, which is located in the memory 1102. The processor 1101 reads information from the memory 1102 and completes the steps of the aforementioned method in combination with its hardware.

In an exemplary embodiment, the communication device 110 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general-purpose processors, controllers, Micro Controller Units (MCUs), microprocessors, or other electronic components, for executing the above-mentioned methods.

The embodiments of the disclosure also provide a computer-readable storage medium having a computer program stored thereon.

If the computer-readable storage medium is applied to a NW device, the processor, when executing the computer program, receives first information from at least one device and determines second information based on the first information and/or second information. The at least one device includes a first device and/or a second device, the first information is DC negotiation results information of the at least one device, and the second information is DC indication information. In detail, the computer program may also be used to implement the method shown in FIG. 1, which belongs to the same concept as the embodiment of the communication method shown in FIG. 1, and the specific implementation process can be referred to the method embodiments, which will not be repeated here.

If the computer-readable storage medium is applied to a first device, the processor, when executing the computer program, sends first information to a NW device, in which the first information is DC negotiation results information of the first device. In detail, the computer program may also be used to implement the method shown in FIG. 2, which belongs to the same concept as the embodiment of the communication method shown in FIG. 2, and the specific implementation process can be referred to the method embodiments, which will not be repeated here.

If the computer-readable storage medium is applied to a second device, the processor, when executing the computer program, sends first information to a NW device, in which the first information is DC negotiation results information of the second device. In detail, the computer program may also be used to implement the method shown in FIG. 3, which belongs to the same concept as the embodiment of the communication method shown in FIG. 3, and the specific implementation process can be referred to the method embodiments, which will not be repeated here.

In the embodiments of the disclosure, it should be understood that the disclosed apparatuses and methods can be realized in other ways. The apparatus embodiments described above are only schematic. For example, the units are classified only depends on their logical functions, and they may be classified in other ways in actual implementation. For example, some units or components may be combined or integrated into another system, or some features may be ignored or not implemented. Moreover, coupling, direct coupling or communication connections among components shown or discussed can be realized through indirect coupling or communication connections among some interfaces, devices or units, which may be electrical, mechanical or in other forms.

The units described above as separate components may or may not be physically separated. The components displayed as units may or may not be physical units, and they may be located in one place or distributed to multiple NW units. Some or all of the units may be selected as needed to achieve the purpose of the solution of the embodiment.

In addition, all functional units in the embodiments of the disclosure may be integrated into one processing unit, or each unit may be used as an independent unit, or two or more units may be integrated into one unit. The above integrated unit may be realized in the form of hardware, or in the form of a combination of hardware and software functional units.

Those skilled in the art understand that all or part of the steps to realize the above method embodiments may be completed by related hardware driven by programs. The above programs may be stored in a computer-readable storage medium. When the programs are executed, the steps including the above-mentioned method embodiments are implemented. The storage medium includes: a mobile storage device, a Read-Only Memory (ROM), a Random Access Memory (RAM), a magnetic disk or an optical disk and other mediums that can store program codes.

Or, if the integrated units of the disclosure are realized in the form of software functional modules and sold or used as independent products, they can be stored in a computer-readable storage medium. Based on this understanding, the technical schemes of the embodiments of the disclosure essentially or the part that contributes to related art can be embodied in the form of a software product. The computer software product is stored in a storage medium and includes several instructions for enabling a computer device (e.g., a personal computer, a server, or a NW device) to execute all or part of the methods described in the embodiments of the disclosure. The aforementioned storage medium includes: a mobile storage device, a ROM, a RAM, a disk or an optical disk, and other mediums that can store program codes.

It should be noted that the terms "first" and "second" are used to distinguish similar objects, and are not necessarily used to describe a specific order or sequence.

In addition, the technical solutions described in the embodiments of the disclosure can be arbitrarily combined without conflict.

Only some specific implements of the disclosure are illustrated above, which do not limit the scope of protection of the disclosure. Any technician familiar with the technical field can easily think of changes or substitutions within the technical scope disclosed by the disclosure, which should be covered by the protection scope of the disclosure. Therefore, the protection scope of the disclosure should be based on the protection scope of the claims.

## Claims

1. A communication method, performed by a network device, comprising:
receiving first information from at least one device; and
determining second information based on the first information;
wherein the at least one device comprises a first device and/or a second device, the first information comprises data channel negotiation results information of the at least one device, and the second information is data channel indication information.

2. The method of claim **1,** wherein the data channel negotiation results information of the second device comprises at least one of following information:
an indication about that a second terminal does not support a data channel;
an indication about that a second network does not support a data channel;
an indication about failure of data channel negotiation of the second terminal;
an indication about failure of data channel negotiation of the second network; or
an indication about that data channel information is not contained.

3. The method of claim 1, wherein the data channel negotiation results information of the second device comprises at least one of following information:
an indication about that a second terminal supports a data channel;
an indication about that a second network supports the data channel;
an indication about success of data channel negotiation of the second terminal;
an indication about success of data channel negotiation of the second network; or
an indication that contains data channel information after negotiation.

4. The method of claim 1, wherein the second device comprises at least one of: a second terminal, a network element of a second network, or the second network.

5. The method of claim 1, wherein the data channel negotiation results information of the first device comprises at least one of following information:
an indication about that a first network does not support a data channel;
an indication about that a first terminal does not support the data channel;
an indication about failure of data channel negotiation of the first network;
an indication about failure of data channel negotiation of the first terminal; or
an indication about that data channel information is not contained.

6. The method of claim 1, wherein the data channel negotiation results information of the first device comprises at least one of following information:
an indication about that a first network supports a data channel;
an indication about that a first terminal supports the data channel;
an indication about success of data channel negotiation of the first network;
an indication about success of data channel negotiation of the first terminal; or
an indication that contains data channel information after negotiation.

7. The method of claim 1, wherein the first device comprises at least one of: a first terminal, a network element of a first network, or the first network;
the network element of the first network comprises at least one of:
a proxy-call session control function (P-CSCF), a channel media function (CMF), a serving-call session control function (S-CSCF), a multi-media application server (MMTEL AS), a data channel media function (DCMF), a media repository server (MRS), a data channel media (DCM), or a data channel server-user plane (DCS-U).

8. The method of claim 1, wherein the data channel indication information comprises at least one of:
a dual network mode;
a dual peer mode;
a local network mode;
a peer or remote network mode; or
an end-to-end mode.

9. The method of claim 1, further comprising:
sending a first message to the first device, wherein the first message at least comprises the second information.

10. The method of claim 9, wherein the first message is one of: a calling request response message, a 183 message, a 200OK message or a data channel request response message.

11. The method of claim 9 or 10, wherein after sending the first message to the first device, the method further comprises:
receiving a first request message from the first device, wherein the first request message is used to request for first application information;
determining the first application information based on the first request message and/or the second information; and
sending the first application information to the first device.

12. The method of claim 11, wherein the first request message comprises at least one of:
a user identity (ID);
a first terminal ID;
data channel service information;
required data channel mode information; or
a request for data channel service catalogue information.

13. The method of claim 11, wherein the first application information comprises:
information on programs that match a required data channel mode in the first request message, and/or a program list that matches the required data channel mode in the first request message.

14. The method of claim 1, wherein after determining the second information, the method further comprises:
receiving a second request message from the first device, wherein the second request message is used for requesting to query the data channel indication information, and/or, for obtaining second application information; and
sending the second information to the first device based on the second request message, and/or, determining the second application information based on at least one of the second request message, the data channel indication information, locally stored information or information obtained by querying a pre-configured database, and sending the second application information to the first device.

15. The method of claim 14, wherein the second application information comprises at least one of:
the data channel indication information;
a first application catalogue, comprising information on programs determined based on the data channel indication information; or
a second application catalogue, comprising information on at least one program, wherein each program meets a requirement of the data channel indication information.

16. The method of claim 1, wherein the at least one device comprises the first device and the second device, and before receiving the first information from the second device, the method further comprises:
receiving a third request message from the first device, wherein the third request message is used for requesting to establish a data channel with the second device; and
sending a fourth request message to the second device, wherein the fourth request message is used for requesting the second device to establish a data channel with the first device.

17. A communication method, performed by a first device, comprising:
sending first information to a network device, wherein the first information is data channel negotiation results information of the first device.

18. The method of claim 17, further comprising:
receiving a first message from the network device, wherein the first message at least comprises second information, and the second information is data channel indication information.

19. The method of claim 17, wherein the data channel negotiation results information of the first device comprises at least one of following information:
an indication about that a first network does not support a data channel;
an indication about that a first terminal does not support the data channel;
an indication about failure of data channel negotiation of the first network;
an indication about failure of data channel negotiation of the first terminal; or
an indication about that data channel information is not contained.

20. The method of claim 17, wherein the data channel negotiation results information of the first device comprises at least one of following information:
an indication about that a first network supports a data channel;
an indication about that a first terminal supports the data channel;
an indication about success of data channel negotiation of the first network;
an indication about success of data channel negotiation of the first terminal; or
an indication that contains data channel information after negotiation.

21. The method of claim 17, wherein the first device comprises at least one of: a first terminal, a network element of a first network, or the first network;
the network element of the first network comprises at least one of:
a proxy-call session control function (P-CSCF), a channel media function (CMF), a serving-call session control function (S-CSCF), a multi-media application server (MMTEL AS), a data channel media function (DCMF), a media repository server (MRS), a data channel media (DCM), or a data channel server-user plane (DCS-U).

22. The method of claim 18, wherein the data channel indication information comprises at least one of:
a dual network mode;
a dual peer mode;
a local network mode;
a peer or remote network mode; or
an end-to-end mode.

23. The method of claim 18, wherein the first message is one of: a calling request response message, a 183 message, a 200OK message or a data channel request response message.

24. The method of claim 18, wherein after receiving the first message from the network device, the method further comprises:
sending a first request message to the network device, wherein the first request message is used to request for first application information; and
receiving the first application information from the network device.

25. The method of claim 24, wherein the first request message comprises at least one of:
a user identity (ID);
a first terminal ID;
data channel service information;
required data channel mode information; or
a request for data channel service catalogue information.

26. The method of claim 24, wherein the first application information comprises:
information on programs that match a required data channel mode in the first request message, and/or a program list that matches the required data channel mode in the first request message.

27. The method of claim 18, wherein after sending the first information to the network device, the method further comprises:
sending a second request message to the network device, wherein the second request message is used for requesting to query the data channel indication information, and/or for obtaining second application information; and
receiving the second information and/or the second application information from the network device.

28. The method of claim 27, wherein the second application information comprises at least one of:
the data channel indication information;
a first application catalogue, comprising information on programs determined based on the data channel indication information; or
a second application catalogue, comprising information on at least one program, wherein each program meets a requirement of the data channel indication information.

29. A communication method, performed by a second device, comprising:
sending first information to a network device, wherein the first information is data channel negotiation results information of the second device.

30. The method of claim 29, wherein the data channel negotiation results information of the second device comprises at least one of following information:
an indication about that a second terminal does not support a data channel;
an indication about that a second network does not support the data channel;
an indication about failure of data channel negotiation of the second terminal;
an indication about failure of data channel negotiation of the second network; or
an indication about that data channel information is not contained.

31. The method of claim 29, wherein the data channel negotiation results information of the second device comprises at least one of following information:
an indication about that a second terminal supports a data channel;
an indication about that a second network supports the data channel;
an indication about success of data channel negotiation of the second terminal;
an indication about success of data channel negotiation of the second network; or
an indication that contains data channel information after negotiation.

32. The method of claim 29, wherein the second device comprises at least one of: a second terminal, a network element of a second network, or the second network.

33. The method of claim 29, wherein before sending the first information to the network device, the method further comprises:
receiving a fourth request message from the network device, wherein the fourth request message is used for requesting the second device to establish a data channel with a first device; and
trying to establish the data channel.

34. A communication apparatus, applied to a network device, comprising:
a first receiving module, configured to receive first information from at least one device; and
a first processing module, configured to determine second information based on the first information;
wherein the at least one device comprises a first device and/or a second device, the first information comprises data channel negotiation results information of the at least one device, and the second information is data channel indication information.

35. A communication apparatus, applied to a first device, comprising:
a second sending module, configured to send first information to a network device, wherein the first information is data channel negotiation results information of the first device.

36. A communication apparatus, applied to a second device, comprising:
a third sending module, configured to send first information to a network device, wherein the first information is data channel negotiation results information of the second device.

37. A communication apparatus, comprising a memory, a processor and a computer program stored in the memory and executable by the processor, wherein the processor implements steps of the method according to any one of claims 1-16 when executing the computer program, or the processor implements steps of the method according to any one of claims 17-28 when executing the computer program, or the processor implements steps of the method according to any one of claims 29-33 when executing the computer program.

38. A computer-readable storage medium having a computer program stored thereon, wherein when the computer program is executed by a processor, steps of the method of any one of claims 1-16 are implemented, or when the computer program is executed by the processor, steps of the method of any one of claims 17-28 are implemented, or when the computer program is executed by the processor, steps of the method of any one of claims 29-33 are implemented.
